# EUROPEAN PATENT APPLICATION

(11) **EP 4 470 927 A1**
(43) Date of publication of application: **04.12.2024**
(21) Application number: 23397503.6
(22) Date of filing: 31.05.2023
(51) Int. Cl.: B64U 50/19, B64U 50/31, B64U 50/34, B64U 10/25

(54) **HIGH-ALTITUDE, UNMANNED AIRCRAFT FOR EARTH OBSERVATION**

(71) Applicant: Iceye Oy, 02150 Espoo (FI)
(72) Inventor: Coelho, Daniel, 02150 Espoo (FI); Neerot, Martin, 02150 Espoo (FI); Korczyc, Jakub, 02150 Espoo (FI)
(74) Representative: Moosedog Oy

(57) **Abstract**

Synthetic aperture radar (SAR) is a type of imaging technology that can be used for a variety of applications such as Earth observation, mapping, object tracking, change detection (e.g., in arctic ice), natural catastrophe monitoring, and many other applications. A high-altitude, unmanned aircraft, for performing synthetic-aperture radar (SAR) imaging, includes a fuselage, wings connected to the fuselage and for providing lift to the aircraft, one or more electrically-powered propellers for providing thrust to the aircraft, a SAR payload for performing SAR imaging of the surface of the Earth when the aircraft is in flight, solar cells for generating electricity to drive the one or more electrically-powered propellers and to operate the SAR payload, and one or more batteries for storing electrical energy generated by the solar cells.

## Description

### Field

The present disclosure relates to radar imaging and in particular to a high-altitude, unmanned aircraft for Earth observation.

### Background

Synthetic aperture radar (SAR) is a type of imaging technology that can be used for a variety of applications such as Earth observation, mapping, object tracking, change detection (e.g., in arctic ice), natural catastrophe monitoring, and many other applications. SAR images are a type of image created by transmitting radar signals, receiving the reflected and scattered radar return signals, and processing the return signals in order to form an image. This is in contrast to optical imagery, a passive technology wherein images are captured by receiving light reflected or originating from an object. SAR technology, on the other hand, is an active rather than a passive technology since it relies on transmitting a radar signal rather than relying on sunlight or other light sources. A significant advantage of SAR technology over optical imagery is that SAR technology can image at night as well as through clouds and other adverse weather conditions. However, forming an image using SAR technology is generally more complex and generally requires significant signal processing of the returned echoes in order to generate them.

More particularly, SAR images are acquired from a moving transceiver, such as a transceiver that comprises part of a satellite. In conventional radar, the spatial resolution of an image generated by measuring reflections of a radar signal is directly proportional to the bandwidth of the radar signal and inversely proportional to the dimensions of the antenna used to transmit and receive the radar signal. In other words, the larger the antenna, the finer the detail. This means that the length and height of the antenna that would be required to capture high-resolution images using conventional radar is often impractical, particularly for airborne use.

In contrast, SAR images are captured using a "synthetic aperture". A smaller and consequently more practical antenna is used on a moving platform to make a series of measurements of reflected radar signals, and those measurements are combined to simulate a much larger antenna. This is achieved by exploiting the Doppler effect created by the moving SAR platform. Consequently, the resolution of a SAR image corresponds to the resolution of a conventional radar image captured using an antenna much larger than the one used to capture the SAR image.

It is well-known to equip orbiting satellites with SAR technology, with the aim of capturing images of target locations on the Earth's surface. One problem with using an orbiting satellite to perform SAR imaging, however, is that the satellite can only discontinuously image the target location, since the satellite will only have line-of-sight to the target location for short periods of time during each orbit. Solutions to this problem are presented in the present disclosure.

### Summary

According to a first aspect of the disclosure, there is provided a high-altitude, unmanned aircraft for performing synthetic-aperture radar (SAR) imaging, comprising: a fuselage; wings connected to the fuselage and for providing lift to the aircraft; one or more electrically-powered propellers for providing thrust to the aircraft; a SAR payload for performing SAR imaging of the surface of the Earth when the aircraft is in flight; solar cells for generating electricity to drive the one or more electrically-powered propellers and to operate the SAR payload; and one or more batteries for storing electrical energy generated by the solar cells.

The SAR payload may be configured to operate within the Kₐ band.

The SAR payload may be configured to be side-looking at a look angle of 10° or greater.

The one or more batteries may comprise lithium-ion batteries.

The SAR payload may comprise at least one transmitter for transmitting SAR radar waves and at least one receiver for receiving reflections of the SAR radar waves. The at least one transmitter may be provided in a module that is separate from a module in which is provided the at least one receiver.

The at least one transmitter may be provided in a nose of the aircraft and wherein the at least one transmitter is provided in at least one of the wings or a tail of the aircraft.

The SAR payload may comprise at least one transmitter for transmitting SAR radar waves and at least one receiver for receiving reflections of the SAR radar waves. The at least one transmitter and the at least one receiver may be provided in a nose of the aircraft.

The aircraft may further comprise a wireless communications module for allowing the aircraft to be remotely operated using communications from a satellite or a ground control station.

The aircraft may further comprise one or more vertically-oriented surfaces. At least one of the solar cells may be located on the one or more vertically-oriented surfaces.

The one or more vertically-oriented surfaces may comprise one or more of: one or more surfaces of a tail of the aircraft; and one or more surfaces of a tip of at least one of the wings of the aircraft.

The aircraft may be configured to fly at an altitude between 50,000 and 80,000 feet.

The aircraft may further comprise a tail connected to the fuselage, the tail comprising one or more elevators for controlling a pitch of the aircraft.

The tail may further comprise a rudder for controlling a yaw of the aircraft.

According to a further aspect of the disclosure, there is provided a method of performing synthetic-aperture radar (SAR) imaging, comprising: flying an unmanned aircraft over a target location on the surface of the Earth, wherein the unmanned aircraft comprises: a fuselage; wings connected to the fuselage and providing lift to the aircraft; one or more electrically-powered propellers providing thrust to the aircraft; a SAR payload; solar panels for generating electricity to drive the one or more electrically-powered propellers and to operate the SAR payload; and one or more batteries for storing electrical energy generated by the solar panels; and using the SAR payload to perform SAR imaging of the target location.

Using the SAR payload to perform SAR imaging may comprise operating the SAR payload within the Kₐ band.

Flying the aircraft may comprise: flying the aircraft at a first altitude; while flying the aircraft at the first altitude, waiting for the batteries to be charged above a threshold; and once the batteries are charged above the threshold, climbing the aircraft to a second altitude higher than the first altitude.

Flying the aircraft may further comprise, at sunset, descending the aircraft to the first altitude.

Descending the aircraft to the first altitude may comprise operating the propellers at a minimal level so as to accelerate the descent of the aircraft to the first altitude.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of an unmanned aircraft for performing SAR imaging, according to an embodiment of the disclosure;
FIG. 2 is a top view of the unmanned aircraft of FIG. 1, according to an embodiment of the disclosure;
FIGS. 3A and 3B are respective cross-sectional and perspective views of a SAR payload according to an embodiment of the disclosure;
FIG. 4 is a plot showing aircraft altitude as a function of time, according to an embodiment of the disclosure;
FIG. 5 is a plot showing battery state as a function of time, according to an embodiment of the disclosure;
FIG. 6 is a diagram showing the unmanned aircraft of FIG. 1 performing SAR imaging, according to an embodiment of the disclosure; and
FIG. 7 is a flow diagram of an example method of flying an unmanned aircraft for performing SAR imaging.

### Detailed Description

The present disclosure seeks to provide novel, high-altitude, unmanned aircraft for Earth observation. While various embodiments of the disclosure are described below, the disclosure is not limited to these embodiments, and variations of these embodiments may well fall within the scope of the disclosure which is to be limited only by the appended claims.

"High Altitude Platform Stations" (HAPS), also sometimes known as "High Altitude Pseudo Satellites", are vehicles designed to operate at high altitude within the Earth's atmosphere rather than in space. Such vehicles can include balloons, blimps, or aircraft.

Generally, embodiments of the disclosure are directed at a high-altitude, unmanned aircraft for performing Earth observation through the use of synthetic-aperture radar (SAR) imaging. The aircraft includes a fuselage, wings connected to the fuselage and for providing lift to the aircraft, one or more electrically-powered propellers for providing thrust to the aircraft, a SAR payload for performing SAR imaging of the surface of the Earth when the aircraft is in flight, solar panels for generating electricity to drive the one or more electrically-powered propellers and to operate the SAR payload, and one or more batteries for storing electrical energy generated by the solar panels.

Such an aircraft may be a long-endurance aircraft. For example, the aircraft may operate at an altitude of at least 50,000 feet, and according to some embodiments may operate in an altitude range of 50,000 - 80,000 feet, or 60,000 - 80,000 feet. For instance, the aircraft may gain altitude during the day to build up potential energy and may then use that potential energy to save energy by losing altitude at night when there is no sunlight. According to some embodiments, a long-endurance aircraft is an aircraft that can operate in the atmosphere for at least 24 hours, or at least 36 hours, or at least 48 hours, or at least 72 hours, or at least one week.

Advantageously, the unmanned aircraft may circle above a given target location on the Earth's surface for longs periods of time (such as days or weeks or even months), allowing the unmanned aircraft to perform continuous monitoring of the target location using the aircraft's SAR payload. The aircraft uses electric propulsion powered by solar cells and batteries and may be optimized to be as lightweight and as efficient as possible, thereby allowing the flight time of the aircraft to be maximized. For example, according to one embodiment, the aircraft may weigh about 80 kg, may have a 28-meter wingspan, and may be made primarily of composite materials. According to some embodiments, the aircraft can stay aloft indefinitely, only coming down to land for maintenance or other reasons, such as battery degradation.

In order to enable the unmanned aircraft to persist in flight for long periods of time, components of the aircraft may be powered using electricity from onboard batteries. The batteries may be recharged from solar panels that are also provided on the aircraft.

According to some embodiments, the solar cells may be positioned on the exterior surface of the wings, or on the exterior surface of some other portion of the aircraft. The solar cells may also be located on other structures of the aircraft. For example, the solar cells may be located so as to maximize vertical surface coverage to extend energy production at sunrise and sunset. For example, one or more portions of the tail of the aircraft, such as the vertical stabilizer, may be provided with solar cells as described above. Other vertical surfaces of the aircraft that may be fitted with solar cells include, for example, the fuselage (e.g., vertical portions of the fuselage) and any vertical winglets at the end of the wings.

The unmanned aircraft may additionally include a wireless communication module, allowing the aircraft to be remotely controlled by satellite communications or communications from a ground control station.

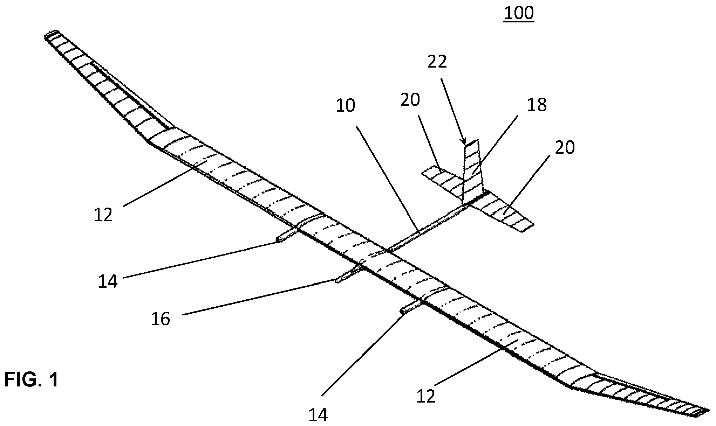

Turning now to FIG. 1, there is shown a perspective view of a high-altitude, unmanned aircraft 100 according to an embodiment of the disclosure.

Aircraft 100 includes a fuselage 10, wings 12 connected to fuselage 10, and a tail 22 connected to a rear of fuselage 10. Tail 22 includes a pair of horizontal stabilizers 20 comprising an elevator (not shown) for controlling a pitch of aircraft 100, as well as a vertical stabilizer 18 comprising a rudder (not shown) for controlling a yaw of aircraft 100.

Thrust is provided by a pair of electrically-powered propellers 14 connected to wings 12 (in the drawings, only nacelles are shown, but the skilled person will understand that propellers will be secured to the nacelles in order to provide thrust). At a front of aircraft 100 is located the nose of aircraft 100. Inside the nose is housed a SAR payload 16 comprising a SAR radar for performing SAR imaging of a target location on the Earth's surface as aircraft 100 is in flight. According to some embodiments, SAR payload 16 may be housed in a different location on aircraft 100 or distributed across multiple locations on aircraft 100.

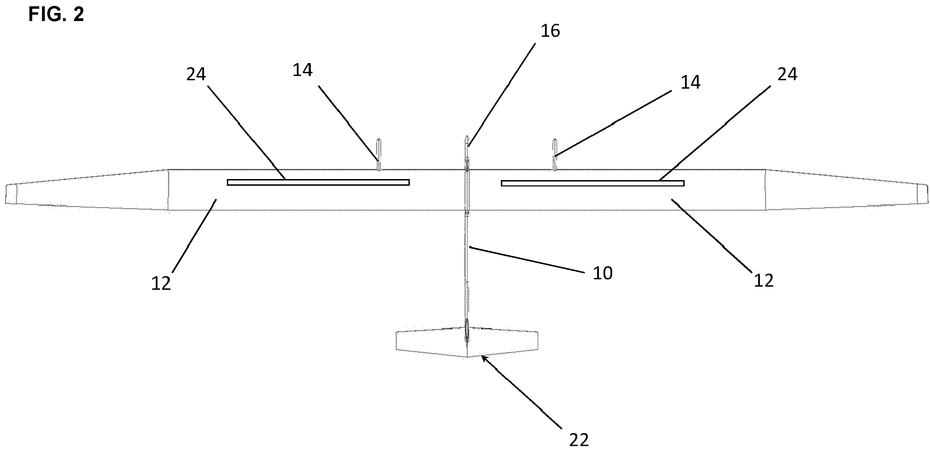

Turning to FIG. 2, there is shown a top view of aircraft 100. A pair of banks of batteries 24 (such as lithium-ion batteries) are provided within wings 12. Locating batteries 24 in wings 12 can help to reduce weight by locating the relatively heavy battery components close to lifting surfaces of aircraft 100, thereby lessening the requirements on the structure of aircraft 100. According to some embodiments, batteries 24 may be stored in another location on aircraft 100, such as in the nacelles. Batteries 24 store electrical energy generated by solar cells, as described in further detail below. Electrical energy from batteries 24 may be used to power propellers 14, SAR payload 16, and other components of aircraft 100 such as a wireless communication module (not shown) that is used to receive and transmit wireless communications sent by ground stations and/or by orbiting satellites to and from aircraft 100. Batteries containing lithium such as lithium-ion batteries are advantageous because they can store a lot of energy for a given weight. In alternative embodiments, other types of batteries with similarly high specific energy, or gravimetric energy density (Wh/kg), could also be used.

The wireless communication module may allow for a fleet of orbiting satellites to relay instructions to aircraft 100 from a control station on the ground in case aircraft 100 is not within direct communication range of a ground station. Data captured by SAR payload 16 may additionally be downloaded to the control station via the orbiting satellites. The control station may additionally centrally control multiple such unmanned aircraft. Furthermore, since line-of-sight is not required to control aircraft 100, there is effectively no limit to where aircraft 100 can fly once airborne. In addition, relaying communications via orbiting satellites may allow for more secure communications with aircraft 100, reducing the likelihood of communications link losses due to interferences or jamming.

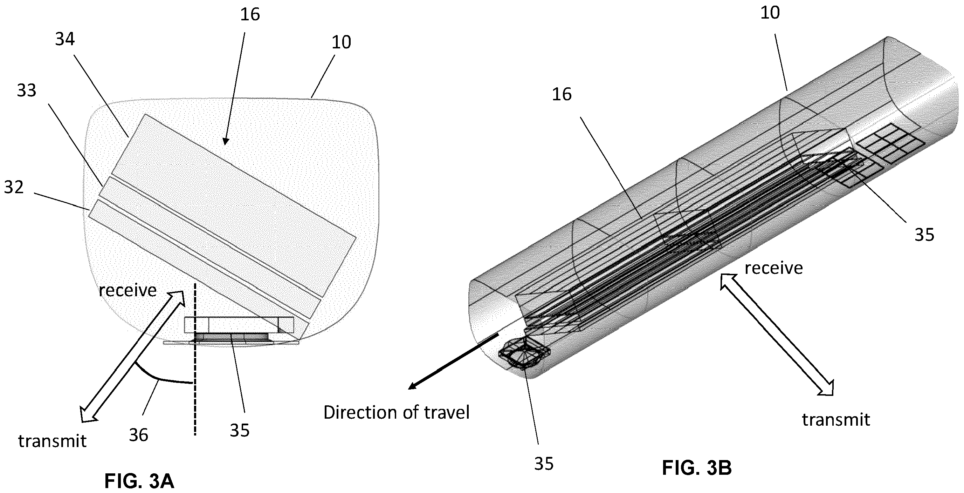

FIGS. 3A and 3B illustrate SAR payload 16 in greater detail. As can be seen in FIG. 3A, SAR payload 16 includes a phased-array transceiver antenna 32, power amplifiers 34, and RF connections 33 for transferring power from power amplifiers 34 to phased-array antenna 32. According to this embodiment, SAR payload 16 is housed within fuselage 10 (in particular, the nose of aircraft 100). A SAR radar as used for Earth observation applications is typically side-looking. In other words, it does not look straight down as might be the case with other technologies such as optical imaging. This is because the specular radar reflection from the nadir (the area directly underneath the SAR platform) would be too bright to form a good image. As such, SAR is performed by sending radar pulses to the side at a certain *"*look angle*"* which is the angle between a line pointing straight down from the radar to the Earth and the direction in which the antenna is pointing. A look angle 36 is indicated in FIG. 3A. In an example, the look angle is greater than 10°, and could be between 10° and 80°. In FIGS. 3A and 3B, adjustable payload mounts 35 are used to adjust look angle 36 of SAR radar waves emitted by phased-array antenna 32. In an example, look angle 36 can be adjusted manually, or automatically through the use of a motor or other mechanism. In an example, look angle 36 is automatically adjustable during flight through commands from the ground or from a preprogrammed mission. Payload mounts 35 may also be vibrationally isolated from fuselage 10.

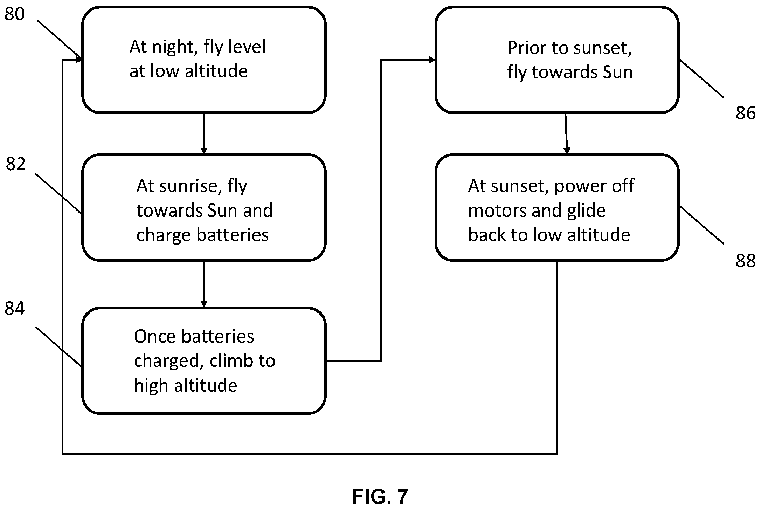

According to one example method of operating a high-altitude, unmanned aircraft, as now described and as illustrated in FIG. 7, the aircraft may remain airborne for very long periods of time, for example only needing to come down for maintenance or when the battery capacity has been degraded. In an example of such an aircraft, the solar panels are located on the surfaces of the wings, and partially cover the leading edge of the wings, thus allowing the aircraft to maximize charging by flying towards the Sun when the Sun is low in the sky such as at sunrise and at sunset. According to one example embodiment, the aircraft may be towed or may fly up to high altitude, for example to altitudes of 18 km to 25 km where the aircraft will be operating. During the day, the aircraft uses solar power and charges the batteries. During the night when no sunlight is available, the aircraft relies on energy stored in the batteries and potential energy gained during the day in order to keep operating. At sunrise (block 82 in FIG. 7), the aircraft's altitude may be 18 km, and its batteries may be in a low state of charge, possibly close to being depleted. During sunrise, the aircraft may therefore fly level towards the Sun to maximize charging. When the rate of solar power generation is greater than the rate of power consumption, the batteries start charging. When the batteries are fully charged, the aircraft may begin its ascent and may climb up to an altitude of 25 km, for example, or as high as possible based on the amount of energy available (block 84 in FIG. 7). Alternatively, the aircraft can start climbing as soon as the rate of solar power generation is greater than the rate of power consumption, and then complete charging of the batteries when the target altitude has been reached.

The SAR payload may be operated at any time, as long as there is sufficient power being generated by the solar panels, or if there is sufficient energy available in the batteries to operate the SAR payload as well as to keep the aircraft flying at night until the batteries can be recharged. In an example, the power draw of the SAR payload is relatively small compared to the power required to keep the aircraft flying. When the SAR payload is not imaging, the SAR payload draws negligible power. The duty cycle of the SAR payload can be adjusted based on the amount of solar power available in order to allow the aircraft to remain aloft indefinitely. Prior to sunset (block 86 in FIG. 7), the aircraft can once again fly towards the Sun to maximize charging of the batteries via energy generation from the solar panels. At sunset (block 88 in FIG. 7), the motors are powered off or put in a state of low energy consumption and the may aircraft glide back down to 18 km. Once at 18 km (block 80 in FIG. 7), the motors are turned back on and the aircraft may fly level until sunrise, at which point the cycle repeats.

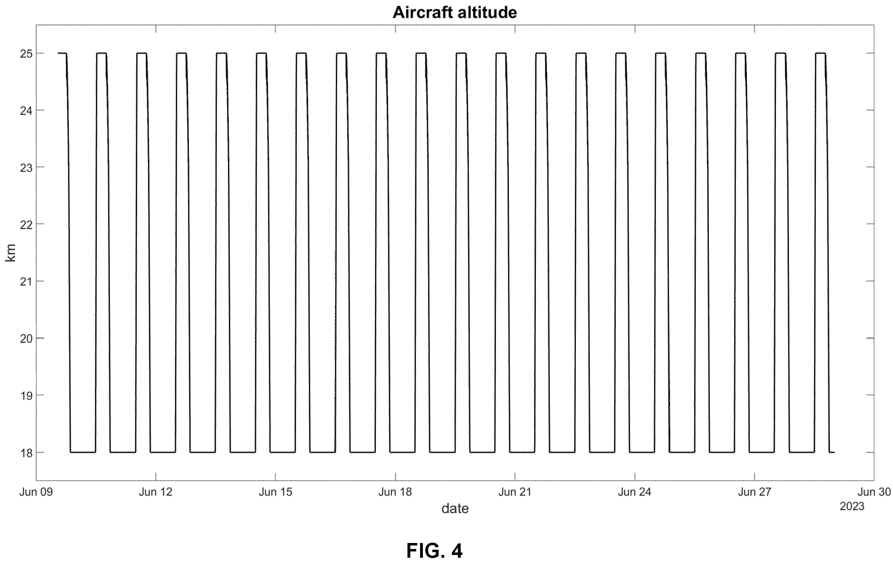

For instance, as can be seen in FIG. 4, the aircraft may ascend to higher altitudes (e.g., 25 km) during the day to gain potential energy (when the solar panels are providing sufficient energy for the plane to climb) and then use the potential energy at night after the Sun has set by descending to lower altitudes (e.g., 18 km) . Generally, the aircraft should be able to fly more efficiently (and therefore use less power) at lower altitudes due to less power being required for level flight at lower altitudes. Also, the motors can be less efficient at lower power outputs, so it can be more efficient to descend relatively quickly by gliding with the motors off or at negligible power rather than gradually descending through the night or over a longer period of time with the motors operating at low power. As can be seen in FIG. 4, by using this method, the aircraft is able to sustain high-altitude flight for long periods of time, in this case for a period of almost three weeks.

According to one example embodiment, a high-altitude, unmanned aircraft with a SAR payload may carry 25 kg of batteries with a specific energy of 400 Wh/kg. The solar panel power density may be 350 W/m², with a solar cell mass-to-area ratio of 250 g/m². In this example, the solar cells are in sheet form (with an approximate area of 40 square metres), a thickness of 75 µm, and are mounted on the front part of the wings, wrapping part-way over the leading edge to maximize solar charging while flying towards the Sun. Solar cells may also be mounted on the vertical surfaces of the tail in order to maximize charging from sunlight coming from the side, for example when flying in circles. Level flight may consume approximately 1200 W. The aircraft either flies towards the Sun or in circles. The initial ascent to high altitude (18 km) can be facilitated by the aircraft being towed up to that altitude, for example. Ascent efficiency is 1/3 and the aircraft may ascend up to 25 km. Descent uses a glide ratio of 30 which, at an airspeed of 100 km/h, translates into a descent rate of 56 m/min.

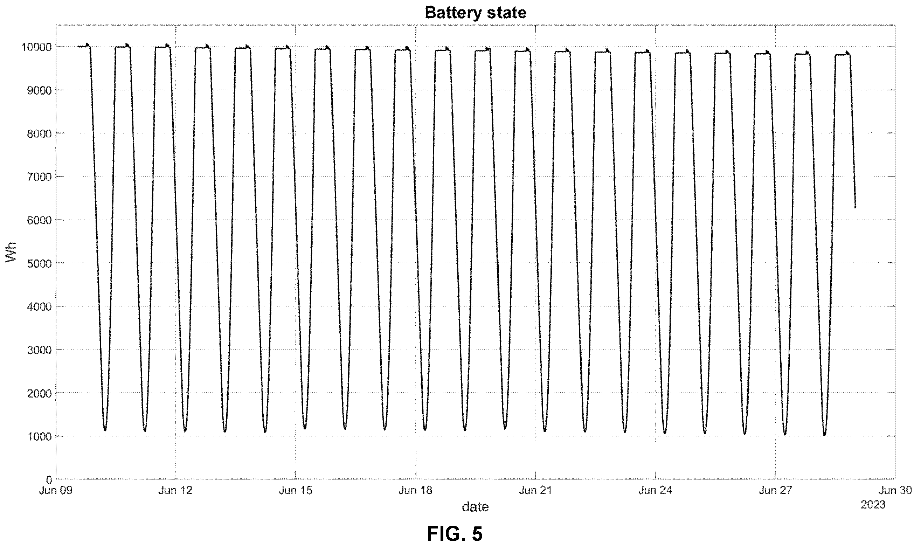

As can be seen in FIG. 5, the batteries may be periodically discharged and charged as the aircraft respectively descends to and flies at low altitude at night, and then ascends to and flies at high altitudes during the day. The state of the battery fluctuates between full (approximately 10,000 Wh) and depleted with approximately 1,000 Wh remaining. In this example, the solar panels are sufficient to fully recharge the batteries each day, with sufficient extra power available for operating the SAR payload and other functions. This is shown by the batteries reaching and staying at a fully charged state for a period of time each day while the aircraft is in level flight. The batteries are also sized to provide sufficient battery capacity to keep the aircraft flying at night when solar power is not available, with a buffer of approximately 1000 Wh that can be used for operating the SAR payload, for example.

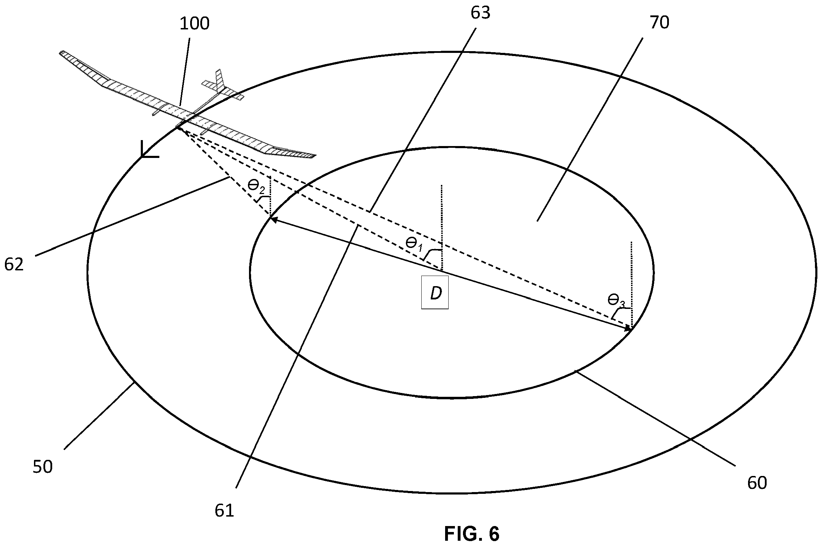

Turning to FIG. 6, there is shown an example of unmanned aircraft 100 circling, via a flight path 50, a target location 70 on the Earth's surface. When operating SAR payload 16 to perform imaging of target location 70, radar waves emitted by the SAR radar of SAR payload 16 define a spotlight 60 that encompasses target location 70 as aircraft 100 circles overhead. According to some embodiments, the width of spotlight 60 may range from 5-30 km. In FIG. 6, the spotlight area is shown as circular, but it is understood that other flight patterns (such as flying in squares) to monitor a target location are also possible. As can be seen in FIG. 6, the radar beam is emanating out from the antenna of SAR payload 16 in the front of aircraft 100 in a direction approximately perpendicular to the direction of motion of aircraft 100 and looking to the side a certain look angle. In some examples, the phased array radar may also comprise some electronic steering that allows the radar beam to be steered slightly forwards and backwards, for example by +/- 2°, or by +/- 10° from directly perpendicular.

Incidence angle is the angle between a center line 61 of the radar beam from the SAR antenna to the target location, and a line normal to the Earth's surface at the target location. The incidence angle is shown by *Θ₁* in FIG. 6. Incidence angle is often used interchangeably with look angle, but they are not always the same. If the ground is flat and the curvature of the Earth is neglected, then look angle and incidence angle can be roughly the same. However, if the terrain is not flat, the incidence angle and the look angle can differ. The Earth's curvature can also cause the incidence angle to be different from the look angle, particularly at high look angles, due to the greater distance along the ground from the SAR payload to the target location.

According to some embodiments, and assuming that the incidence angle is roughly the same as the look angle in this example, the look angle and the incidence angle *θ₁* may be greater than 10° but less than 80° for SAR imaging of marine targets and less than 60° for SAR imaging of land targets. The radar beam has a near edge 62 with an incidence angle of *θ₂* and a far edge 63 with an incidence angle of *θ₃*. It can be seen from FIG. 6 that *θ₂* will be less than *θ₁, and θ₃* will be greater than *θ₁*. In an example, if *θ₁* is 60°, then *θ₂* may be approximately 55° and *θ₃* may be approximately 65°. Other beam widths with different incidence angles are also possible, depending on the configuration of the radar.

According to some embodiments, SAR payload 16 may be configured to perform SAR imaging using X-band frequencies (e.g., 8 - 12 GHz). This is a band that can also be used for SAR imaging on satellites. In other embodiments, SAR payload 16 may be configured to perform SAR imaging using the C-band (e.g. 4 - 8 GHz) or the L-band (e.g. 1 - 2 GHz). C-band in particular is a band that have traditionally been used on SAR earth observation satellites. C and L bands may be useful where lower quality images are acceptable or to mitigate the generally lower efficiency of the electronics in some other bands. When the SAR radar is operating in the Earth's atmosphere, higher frequency bands may also need improved turbulence compensation.

According to some embodiments, the SAR radar is configured to emit radar waves in the Kₐ band, for example waves in the 26.5 - 40 GHz range, or waves in the 33.4 - 36 GHz range (depending on regulations). Generally, the Kₐ band is not used for SAR imaging from space because, among other issues, it can be more affected by atmospheric interference. However, operating SAR payload 16 in the Kₐ band on a high-altitude unmanned aircraft may be beneficial for a number of reasons.

For example, the Kₐ band occupies a range that has a relatively high frequency, and therefore the distance that aircraft 100 needs to travel to form an image of a certain resolution is less than if the SAR radar were operating in a lower frequency band. This is because, relative to the ground, the SAR antenna has to travel a certain distance in order to form the synthetic aperture that is the basis of synthetic aperture radar. Using the Kₐ band can therefore provide a significant savings in time to form the image, because aircraft 100 may typically only travel at an airspeed of about 100 km/h. In contrast, satellites operating in low-earth orbit travel can travel at a speed of approximately 7.8 km/s, so the time required to form an image on a satellite-based SAR platform is much less of a concern than on a HAPS platform.

In addition, the use of the Kₐ band may allow the size of SAR payload 16 to be relatively small. For example, according to some embodiments, the size of the SAR radar may be only 10 cm x 10 cm, and could potentially be even smaller. This is compared to some space-based SAR radars that have antennas that are a meter by several meters, for example. According to some embodiments, in a 10 cm x 10 cm Kₐ band phased-array antenna, the antenna may contain 12 x 12 antenna patches, or 16 x 16 antenna patches. The resolution that can ultimately be achieved by SAR imaging based on the Kₐ band can be less than 10 cm, which is very small. According to some embodiments, the SAR radar may be configured to image over a 2 GHz bandwidth with a pulse repetition frequency (PRF) > 2 GHz. The PRF refers to the number of times (per second) the transmit radar signal is switched on and off. The phased-array antenna may be steered electronically, for example by an angle of +/-10 degrees. In addition, a device may be used to adjust the look angle of the SAR radar inside fuselage 10, to allow for pointing the SAR radar or for greater variation in the extent of spotlight 60.

The power amplifiers for Kₐ band radars can be less efficient than for other power amplifiers operating in other frequency bands, so the power output requirement for Kₐ band radars can be higher than for radars operating at lower frequencies. However, this can be at least partially compensated for because the distance that SAR payload 16 has to travel to form the synthetic aperture is less than for lower frequencies. This may result in shorter illumination times, thereby allowing the Kₐ band radar to be activated for relatively shorter periods of time (e.g., lower duty cycle) in order to capture the desired image or images. While the difference in illumination time may not be significant for fast-moving, space-based SAR platforms, the difference in illumination time for relatively slow-moving HAPS platforms can be significant, for example ranging from tens of seconds to a minute or more.

According to the embodiment of FIG. 1, the transmitter and the receiver of SAR payload 16 are in the nose of aircraft 100. Additional receivers may be placed at tail 22 and/or along wings 12. While the transmitter and receiver of the SAR radar may be in the same unit, they may alternatively be separated into two units. Separating the transmitter and receiver into two units has the advantage of simplicity of design while also keeping the transmitter, where most of the heat is generated, away from the receiver which should preferably remain cool. For example, the transmitter may be mounted in fuselage 10 while the receiver could be mounted in fuselage 10 or some other location on aircraft 100 such as the tips of wings 12 or on tail 22. Such separation of transmitter and receiver may assist with thermal management and may also have benefits for object location and detection, for example for detecting moving objects on the Earth's surface, or for the assessment of elevations on the Earth's surface.

According to one embodiment, a high-altitude, unmanned HAPS aircraft has a 0.1 m x 0.05 m Kₐ-band phased-array antenna comprising a single row of eight antenna patches in a panel. The panel has 32 power amplifiers feeding the antenna patches, with each power amplifier outputting 4 W. For each power amplifier, there is also a 0.2 W connector loss and a 1.2 W antenna loss, for a net of 2.6 W radiating from each antenna patch. For the entire panel, the radiated power is 84.6 W, and the power delivered to the phased-array antenna is 122.2 W, representing peak power that is delivered and radiated. Depending on the duty cycle at which the phased-array antenna is operated, the average power radiated and average power delivered to the antenna could also be significantly lower.

According to one embodiment of using a high-altitude, unmanned HAPS aircraft to perform SAR imaging, the aircraft has an airspeed of 0.028 km/s, or about 100 km/h, and is flying at an altitude of 20 km. Images can be obtained with an incidence angle *Θ₁* of 30° (roughly equivalent to a look angle of 30°), which translates to a slant range distance from the aircraft to the target of about 23 km. The distance on the ground from the nadir (the point directly underneath the aircraft) to the target is roughly 11.5 km, and the swath width is approximately 2 km wide.

According to one embodiment, the Kₐ-band radar images with a center frequency of 35 GHz. The pulse repetition frequency (PRF) is set to 140 Hz with a duty cycle of 0.3. According to this duty cycle, the average radiated power and average delivered power are about 25 W and 37 W respectively. Since this a small fraction of the roughly 1200 W required to keep an aircraft according to this example in level flight, such power requirements can be supported with the batteries and solar panel systems of the high-altitude unmanned aircraft that has been appropriately designed with this load taken into account. System bandwidth is 1200 MHz, and a total illumination time of about 18 seconds is required to deliver an azimuth resolution of approximately 0.20 m and a range (cross-track) resolution of 0.25 m. This resolution translates to a cell of approximately 0.05 square meters on the ground.

According to another embodiment (showing that even finer resolutions can be achieved), imaging is performed from an altitude of 19 km with an incidence angle *Θ₁* of about 60°, a slant range resolution of 0.075 m, an azimuth resolution of 0.050 m, and a ground range resolution of 0.086 m. This level of resolution can be particularly useful in applications where persistent monitoring of a city, or a town, is desired. Imaging in urban environments can be very difficult to exploit if the resolution of the imaging is greater than 0.5 m. Thus, a much finer resolution of less than 0.1 m × 0.1 m can be very useful for monitoring such closely-packed and dense environments, and can be readily achieved using the Kₐ-band SAR payload with a center frequency of 35 GHz and a bandwidth of 2 GHz.

There is also another advantage to using an incidence angle *Θ₁* of 60° (+/-10°) for this application. SAR systems operating from satellites typically do not use incidence angles as high as 60° because they are much further from the targets on the ground and this greater distance can result in poor range and azimuth ambiguities, which can significantly diminish image quality. However, using low incidence angles can cause extreme layover (a well-known artifact in SAR images) that irretrievably combines ground and building returns, making exploitation challenging. Using a Kₐ band radar on a high-altitude unmanned aircraft with a larger incidence angle *Θ₁* (e.g., 60°) can solve this problem because the aircraft, even at high altitudes in the atmosphere, is still much closer to the ground than satellites, which in low Earth orbits are still over four hundred kilometers above the Earth's surface. As such, azimuth and range ambiguities can be much less, leading to better image quality. Using a higher (e.g., 60°) incidence angle also reduces the layover effects, albeit at the cost of increasing shadowing (where closer objects block the radar signals from reaching objects behind them). However, unlike layover effects, shadow effects can be more easily compensated for by imaging around the target city, for example as shown in FIG. 6. Larger incidence angles can also help to increase ground resolution. In this example, the nominal spotlight diameter for focusing on an area using a high-altitude unmanned aircraft as a SAR platform at 10 cm or lower resolution is approximately 5 km, as indicated by the distance D in FIG. 6.

According to some embodiments, in order to power the various components of aircraft 100, fuel cells may be used instead of or in addition to solar cells.

According to some embodiments, the unmanned aircraft may be provided without a tail. For example, pitch and yaw of the aircraft may be provided using elevators and a rudder provided on other portions of the aircraft.

While the drawings have been presented in the context of an unmanned aircraft with wings extending out of the fuselage, the disclosure extends to other wing designs, such as blended-wing designs in which the wings may be more integrally formed with the fuselage.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A high-altitude, unmanned aircraft for performing synthetic-aperture radar (SAR) imaging, comprising:
a fuselage;
wings connected to the fuselage and for providing lift to the aircraft;
one or more electrically-powered propellers for providing thrust to the aircraft;
a SAR payload for performing SAR imaging of the surface of the Earth when the aircraft is in flight;
solar cells for generating electricity to drive the one or more electrically-powered propellers and to operate the SAR payload; and
one or more batteries for storing electrical energy generated by the solar cells.

2. The aircraft of claim 1, wherein the SAR payload is configured to operate within the Kₐ band.

3. The aircraft of claim 1 or 2, wherein the SAR payload is configured to be side-looking at a look angle of 10° or greater.

4. The aircraft of any preceding claim, wherein the one or more batteries comprise lithium-ion batteries.

5. The aircraft of any preceding claim, wherein:
the SAR payload comprises at least one transmitter for transmitting SAR radar waves and at least one receiver for receiving reflections of the SAR radar waves; and
the at least one transmitter is provided in a module that is separate from a module in which is provided the at least one receiver.

6. The aircraft of claim 5, wherein the at least one transmitter is provided in a nose of the aircraft and wherein the at least one transmitter is provided in at least one of the wings or a tail of the aircraft.

7. The aircraft of any preceding claim, wherein:
the SAR payload comprises at least one transmitter for transmitting SAR radar waves and at least one receiver for receiving reflections of the SAR radar waves; and
the at least one transmitter and the at least one receiver are provided in a nose of the aircraft.

8. The aircraft of any preceding claim, further comprising a wireless communications module for allowing the aircraft to be remotely operated using communications from a satellite or a ground control station.

9. The aircraft of any preceding claim, wherein:
the aircraft further comprises one or more vertically-oriented surfaces; and
at least one of the solar cells is located on the one or more vertically-oriented surfaces.

10. The aircraft of claim 9, wherein the one or more vertically-oriented surfaces comprise one or more of:
one or more surfaces of a tail of the aircraft; and
one or more surfaces of a tip of at least one of the wings of the aircraft.

11. The aircraft of any preceding claim, wherein the aircraft is configured to fly at an altitude between 50,000 and 80,000 feet.

12. A method of performing synthetic-aperture radar (SAR) imaging, comprising:
flying an unmanned aircraft over a target location on the surface of the Earth, wherein the unmanned aircraft comprises:
a fuselage;
wings connected to the fuselage and providing lift to the aircraft;
one or more electrically-powered propellers providing thrust to the aircraft;
a SAR payload;
solar panels for generating electricity to drive the one or more electrically-powered propellers and to operate the SAR payload; and
one or more batteries for storing electrical energy generated by the solar panels; and
using the SAR payload to perform SAR imaging of the target location.

13. The method of claim 12, wherein using the SAR payload to perform SAR imaging comprises operating the SAR payload within the Kₐ band.

14. The method of claim 12 or 13, wherein flying the aircraft comprises:
flying the aircraft at a first altitude;
while flying the aircraft at the first altitude, waiting for the batteries to be charged above a threshold;
once the batteries are charged above the threshold, climbing the aircraft to a second altitude higher than the first altitude; and
at sunset, descending the aircraft to the first altitude.

15. The method of claim 14, wherein descending the aircraft to the first altitude comprises operating the propellers at a minimal level so as to accelerate the descent of the aircraft to the first altitude.

## Amended claims

### Amended claims in accordance with Rule 137(2) EPC.

1. An unmanned aircraft (100) for performing synthetic-aperture radar (SAR) imaging, comprising:
a fuselage (10);
wings (12) connected to the fuselage and for providing lift to the aircraft;
one or more electrically-powered propellers (14) for providing thrust to the aircraft;
a SAR payload (16) for performing SAR imaging of the surface of the Earth when the aircraft is in flight, wherein the SAR payload is configured to operate within the Kₐ band;
solar cells for generating electricity to drive the one or more electrically-powered propellers and to operate the SAR payload; and
one or more batteries (24) for storing electrical energy generated by the solar cells.

2. The aircraft of claim 1, wherein the SAR payload is configured to be side-looking at a look angle of 10° or greater.

3. The aircraft of any preceding claim, wherein the one or more batteries comprise lithium-ion batteries.

4. The aircraft of any preceding claim, wherein:
the SAR payload comprises at least one transmitter for transmitting SAR radar waves and at least one receiver for receiving reflections of the SAR radar waves; and
the at least one transmitter is provided in a module that is separate from a module in which is provided the at least one receiver.

5. The aircraft of claim 4, wherein the at least one transmitter is provided in a nose of the aircraft and wherein the at least one receiver is provided in at least one of the wings or a tail of the aircraft.

6. The aircraft of any preceding claim, wherein:
the SAR payload comprises at least one transmitter (32) for transmitting SAR radar waves and at least one receiver (32) for receiving reflections of the SAR radar waves; and
the at least one transmitter and the at least one receiver are provided in a nose of the aircraft.

7. The aircraft of any preceding claim, further comprising a wireless communications module for allowing the aircraft to be remotely operated using communications from a satellite or a ground control station.

8. The aircraft of any preceding claim, wherein:
the aircraft further comprises one or more vertically-oriented surfaces; and
at least one of the solar cells is located on the one or more vertically-oriented surfaces.

9. The aircraft of claim 8, wherein the one or more vertically-oriented surfaces comprise one or more of:
one or more surfaces of a tail (22) of the aircraft; and
one or more surfaces of a tip of at least one of the wings of the aircraft.

10. The aircraft of any preceding claim, wherein the aircraft is configured to fly at an altitude between 50,000 and 80,000 feet.

11. A method of performing synthetic-aperture radar (SAR) imaging, comprising:
flying an unmanned aircraft (100) over a target location on the surface of the Earth, wherein the unmanned aircraft comprises:
a fuselage (10);
wings (12) connected to the fuselage and providing lift to the aircraft;
one or more electrically-powered propellers (14) providing thrust to the aircraft;
a SAR payload (16);
solar panels for generating electricity to drive the one or more electrically-powered propellers and to operate the SAR payload; and
one or more batteries (24) for storing electrical energy generated by the solar panels; and
using the SAR payload to perform SAR imaging of the target location,
wherein flying the unmanned aircraft comprises:
ascending the unmanned aircraft to a first altitude during the day to gain potential energy; and
descending the unmanned aircraft to a second altitude, lower than the first altitude, at night by using the gained potential energy.

12. The method of claim 11, wherein using the SAR payload to perform SAR imaging comprises operating the SAR payload within the Kₐ band.

13. The method of claim 11 or 12, wherein flying the aircraft further comprises:
flying the aircraft at the second altitude;
while flying the aircraft at the second altitude, waiting for the batteries to be charged above a threshold;
once the batteries are charged above the threshold or when a rate of solar power generation of the solar panels is greater than a rate of power consumption, climbing the aircraft to the first altitude; and
at sunset, descending the aircraft to the second altitude.

14. The method of claim 13, wherein descending the aircraft to the second altitude comprises operating the propellers at a minimal level.
